# EUROPEAN PATENT SPECIFICATION

(11) **EP 3 410 814 B1**
(45) Date of publication and mention of the grant of the patent: **02.12.2020**
(21) Application number: 17744623.4
(22) Date of filing: 31.01.2017
(51) Int. Cl.: H04W 76/10, H04W 76/19, H04W 60/04, H04W 8/02, H04W 12/08, H04W 80/02, H04W 4/70

(54) **METHOD FOR INITIATING TRACKING AREA UPDATE, AND USER EQUIPMENT**
VERFAHREN ZUM BEGINN VON VERFOLGUNGSBEREICHSAKTUALISIERUNG UND BENUTZERGERÄT
PROCÉDÉ DE DÉCLENCHEMENT DE MISE À JOUR DE ZONE DE SUIVI ET ÉQUIPEMENT D'UTILISATEUR

(30) Priority: 31.01.2016 US 201662289315 P; 31.03.2016 US 201662315687 P; 22.04.2016 US 201662326083 P
(43) Date of publication of application: 05.12.2018
(73) Proprietor: LG Electronics Inc., Seoul 07336 (KR)
(72) Inventor: KIM, Taehun, Seoul 06772 (KR); PARK, Sangmin, Seoul 06772 (KR); KIM, Jaehyun, Seoul 06772 (KR); LEE, Jaewook, Seoul 06772 (KR); KU, Gwanmo, Seoul 06772 (KR); RYU, Jinsook, Seoul 06772 (KR)
(74) Representative: Katérle, Axel
(86) International application number: PCT/KR2017/001040
(87) International publication number: WO 2017/131502

(56) References cited:
- WO-A1-2015/031235
- WO-A1-2016/003199
- US-A1- 2010 099 402
- US-A1- 2013 142 052
- US-A1- 2013 150 024
- US-A1- 2015 055 447
- INTEL CORPORATION: "Radio Link Failure criteria and procedures", 3GPP DRAFT; R2-160439_NB-IOT_RLF_INTELV06_CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Budapest, HU; 20160119 - 20160121 18 January 2016 (2016-01-18), XP051054727, Retrieved from the Internet: URL:http://www.3gpp.org/ftp/Meetings_3GPP_ SYNC/RAN2/Docs/ [retrieved on 2016-01-18]
- "3rd Generation Partnership Project; Technical Specification Group Services and System Aspects; Architecture enhancements for Cellular Internet of Things (Release 13)", 3GPP STANDARD; 3GPP TR 23.720, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 23 November 2015 (2015-11-23), pages 1-96, XP051046270, [retrieved on 2015-11-23]

## Description

### Technical Field

The present invention relates to a wireless communication system, and more particularly, to a method and apparatus for initiating tracking area update.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

With appearance and spread of machine-to-machine (M2M) communication and a variety of devices such as smartphones and tablet PCs and technology demanding a large amount of data transmission, data throughput needed in a cellular network has rapidly increased. To satisfy such rapidly increasing data throughput, carrier aggregation technology, cognitive radio technology, etc. for efficiently employing more frequency bands and multiple input multiple output (MIMO) technology, multi-base station (BS) cooperation technology, etc. for raising data capacity transmitted on limited frequency resources have been developed.

In addition, a communication environment has evolved into increasing density of nodes accessible by a user at the periphery of the nodes. A node refers to a fixed point capable of transmitting/receiving a radio signal to/from the UE through one or more antennas. A communication system including high-density nodes may provide a better communication service to the UE through cooperation between the nodes.

### Disclosure

### Technical Problem

Due to introduction of new radio communication technology, the number of user equipments (UEs) to which a BS should provide a service in a prescribed resource region increases and the amount of data and control information that the BS should transmit to the UEs increases. Since the amount of resources available to the BS for communication with the UE(s) is limited, a new method in which the BS efficiently receives/transmits uplink/downlink data and/or uplink/downlink control information using the limited radio resources is needed.

With the development of smart devices, a new method for efficiently transmitting/receiving a small amount of data or infrequently occurring data is required.

3GPP TR 23.720 V1.2.0 (2015-11), "Architecture enhancements for Cellular Internet of Things (Release 13)", XP51046270, proposes in its so-called "Solution 2" to transmit infrequent small data over the control plane using pre-established NAS security. 3GPP draft document R2-160439, "Radiol Link Failure criteria and procedures", XP51054727, proposes a recovery procedure for the "Solution 2" of 3GPP TR 23.720 V1.2.0. US 2013/0150024 A1 discloses a mechanism for conditionally invoking network recovery after detecting an RRC connection failure. In particular, when downlink data is expected by the UE, NAS recovery is triggered.

The technical objects that can be achieved through the present invention are not limited to what has been particularly described hereinabove and other technical objects not described herein will be more clearly understood by persons skilled in the art from the following detailed description.

### Technical Solution

When a user equipment encounters a specific case, it may initiate a TAU procedure by sending a Tracking Area Update (TAU) request. If the specific case is a case where a radio resource control (RRC) connection failure occurs and there is no pending signaling or uplink user data, when the user equipment is using control plane connection to transport user data, the specific case may be applied in the event that an indication that reception of downlink data subsequent to transmission of the uplink data is expected is provided to the network.

The object of the present invention is achieved by providing a method as defined by independent claim 1, a computer-readable medium as defined by independent claim 5 and a user equipment as defined by claim 6.

### [Advantageous Effects]

According to the present invention, uplink/downlink signals can be efficiently transmitted/received. Therefore, overall throughput of a radio communication system can be improved.

According to the present invention, a low-complexity/low-cost UE can communicate with the network while maintaining backward compatibility with the legacy system.

According to the present invention, it is possible to implement a low-complexity/low-cost UE.

According to the present invention, a UE can communicate with the network in narrowband.

According to the present invention, a small amount of data can be efficiently transmitted/received.

It will be appreciated by persons skilled in the art that that the effects that can be achieved through the present invention are not limited to what has been particularly described hereinabove and other advantages of the present invention will be more clearly understood from the following detailed description.

### [Description of Drawings]

The accompanying drawings, which are included to provide a further understanding of the invention, illustrate embodiments of the invention and together with the description serve to explain the principle of the invention.
FIG. 1 is a schematic diagram showing the structure of an evolved packet system (EPS) including an evolved packet core (EPC).
FIG. 2 is a diagram exemplarily illustrating architectures of a general E-UTRAN and EPC.
FIG. 3 is a diagram exemplarily illustrating the structure of a radio interface protocol in a control plane.
FIG. 4 is a diagram exemplarily illustrating the structure of a radio interface protocol in a user plane.
FIG. 5 is a diagram illustrating LTE (Long Term Evolution) protocol stacks for a user plane and a control plane.
FIG. 6 is a flow diagram illustrating a random access procedure.
FIG. 7 is a diagram illustrating a connection procedure in a radio resource control (RRC) layer.
FIG. 8 illustrates user plane protocol stacks between a UE and a P-GW in accordance with the Control Plane CIoT optimization.
FIG. 9 illustrates a procedure of transporting mobile originated data in control plane CIoT EPS optimization.
FIG. 10 illustrates a method of initiating a tracking area update according to the present invention.
FIG. 11 illustrates a node according to an embodiment of the present invention.

### [Mode for Invention]

Although the terms used in the present invention are selected from generally known and used terms while considering functions of the present invention, they may vary according to intention or customs of those skilled in the art or emergence of new technology. Some of the terms mentioned in the description of the present invention may have been selected by the applicant at his or her discretion, and in such cases the detailed meanings thereof will be described in relevant parts of the description herein. Thus, the terms used in this specification should be interpreted based on the substantial meanings of the terms and the whole content of this specification rather than their simple names or meanings.

The embodiments of the present invention described hereinbelow are combinations of elements and features of the present invention. The elements or features may be considered selective unless mentioned otherwise. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a" (or "an"), "one", "the", etc. may include a singular representation and a plural representation in the context of the present invention (more particularly, in the context of the following claims) unless indicated otherwise in the specification or unless context clearly indicates otherwise.

The embodiments of the present invention can be supported by standard specifications disclosed for at least one of wireless access systems including an institute of electrical and electronics engineers (IEEE) 802.xx, a 3rd generation partnership project (3GPP) system, a 3GPP Long Term Evolution (3GPP LTE) system, and a 3GPP2 system. That is, steps or parts that are not described to clarify the technical features of the present invention may be explained with reference to the above standard specifications.

In addition, all terms set forth herein may be explained by the above standard specifications. For example, one or more of standard specifications, such as 3GPP TS 36.211, 3GPP TS 36.213, 3GPP TS 36.321, 3GPP TS 36.322, 3GPP TS 36.323, 3GPP TS 36.331, 3GPP TS 23.401, 3GPP TS 24.301, 3GPP TS 23.228, 3GPP TS 29.228, 3GPP TS 23.218, 3GPP TS 22.011, and 3GPP TS 36.413 may be referenced.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the invention.

Specific terms used for the embodiments of the present invention are provided to aid in understanding of the present invention. These specific terms may be replaced with other terms within the scope and spirit of the present invention.

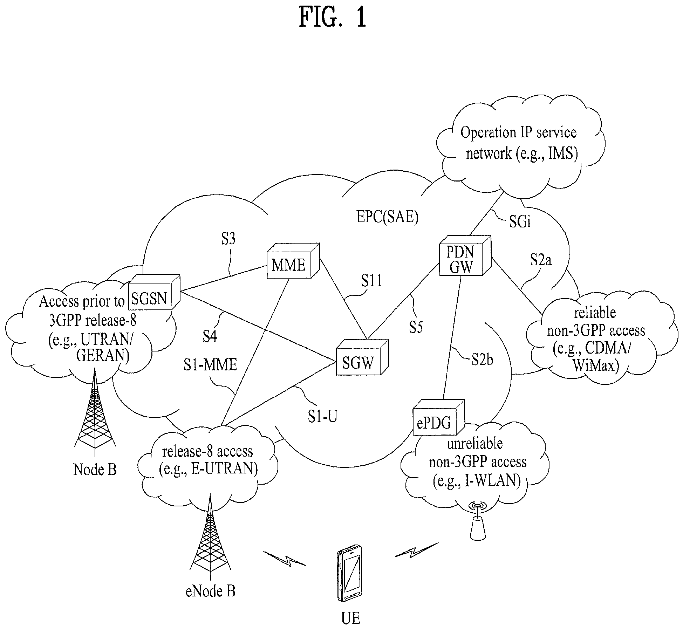

The terms used in this specification are defined as follows.
- IMS (IP Multimedia Subsystem or IP Multimedia Core Network Subsystem): An architectural framework for providing standardization for delivery of voice or other multimedia services over Internet protocol (IP).
- UMTS (Universal Mobile Telecommunications System): Global System for Mobile Communication (GSM)-based 3rd generation mobile communication technology developed by 3GPP.
- EPS (Evolved Packet System): A network system configured by an EPC (Evolved Packet Core), which is an Internet Protocol (IP)-based packet switched (PS) core network and an access network such as LTE, UTRAN, etc. The EPS is evolved from UMT.
- NodeB: A base station of GERAN/UTRAN which is installed outdoors and has coverage of a macro cell scale.
- eNodeB/eNB: A base station of E-UTRAN which is installed outdoors and has coverage of a macro cell scale.
- UE (User Equipment): A user equipment. The UE may be referred to as a terminal, ME (Mobile Equipment), MS (Mobile Station), or the like. The UE may be a portable device such as a notebook computer, cellular phone, PDA (Personal Digital Assistant), smartphone, and multimedia device, or may be a nonportable device such as a PC (Personal Computer) and vehicle-mounted device. The term UE or terminal in the description of MTC may refer to an MTC devic.
- HNB (Home NodeB): A base station of a UMTS network. The HNB is installed indoors and has coverage of a micro cell scale.
- HeNB (Home eNodeB): A base station of an EPS network. The HeNB is installed indoors and has coverage of a micro cell scale.
- MME (Mobility Management Entity): A network node of the EPS network performing functions of Mobility Management (MM) and Session Management (SM).
- PDN-GW (Packet Data Network-Gateway)/PGW/P-GW: A network node of the EPS network performing functions of UE IP address allocation, packet screening and filtering, and charging data collection.
- SGW (Serving Gateway)/S-GW: A network node of the EPS network performing functions of mobility anchor, packet routing, idle mode packet buffering, and triggering of the MME paging the UE.
- PCRF (Policy and Charging Rule Function): A network node of the EPS network making a policy decision for dynamically applying a differentiated QoS and charging policy on a service flow basis.
- OMA DM (Open Mobile Alliance Device Management): A protocol designed for management of mobile devices such as a cellular phone, a PDA, and a portable computer, that performs functions of device configuration, firmware upgrade, and error report.
- OAM (Operation Administration and Maintenance): A group of network management functions that provides network defect indication, performance information, and data and diagnosis functions.
- NAS (Non-Access Stratum): An upper stratum of a control plane between the UE and the MME. The NAS is a functional layer for signaling between a UE and a core network and exchange of a traffic message between the UE and the core network in LTE/UMTS protocol stack. The NAS mainly functions to support UE mobility and a session management procedure for establishing and maintaining IP connection between a UE and a P-GW.
- EMM (EPS Mobility Management): A sub-layer of a NAS layer, that may be in either an "EMM-Registered" or "EMM-Deregistered" state depending on whether a UE is attached to or detached from a network.
- ECM (EMM Connection Management) connection: A signaling connection for exchange of a NAS message, established between the UE and an MME. The ECM connection is a logical connection consisting of an RRC connection between the UE and an eNB and an S1 signaling connection between the eNB and the MME. If the ECM connection is established/terminated, the RRC connection and the S1 signaling connection are all established/terminated as well. To the UE, an established ECM connection means having an RRC connection established with the eNB and, to the MME, the established ECM connection means having an SI signaling connection established with the eNB. Depending on whether a NAS signaling connection, i.e., the ECM connection, is established, ECM may be in either "ECM-Connected" or "ECM-Idle" state.
- AS (Access-Stratum): This includes a protocol stack between the UE and a wireless (or access) network and is in charge of data and network control signal transmission.
- NAS configuration MO (Management Object): An MO used in the process of configuring parameters related to NAS functionality for the UE.
- PDN (Packet Data Network): A network where a server (e.g., an MMS (Multimedia Messaging Service) server, a WAP (Wireless Application Protocol) server, etc.) supporting a specific service is located.
- PDN connection: A logical connection between a PDN and a UE represented by one IP address (one IPv4 address and/or one IPv6 prefix).
- APN (Access Point Name): A text sequence for indicating or identifying a PDN. A requested service or network is accessed through a specific P-GW. The APN means a predefined name (text sequence) in a network so as to discover this P-GW. (e.g., internet.mnc012.mcc345.gprs).
- RAN (Radio Access Network): A unit including a NodeB, an eNodeB and an RNC (Radio Network Controller) for controlling the NodeB and the eNodeB in a 3GPP network. The RAN is present between UEs and provides connection to the core network.
- HLR (Home Location Register)/HSS(Home Subscriber Server): A database containing subscriber information of a 3GPP network. The HSS can perform functions such as configuration storage, identity management and user state storage.
- PLMN (Public Land Mobile Network): A network configured for the purpose of providing mobile communication services to individuals. This network can be configured per operator.
- ANDSF (Access Network Discovery and Selection Function): One network entity that provides a policy to discover and select access that the UE can use with respect to each service provider.
- EPC path (or infrastructure data path): A user plane communication path through an EPC.
- E-RAB (E-UTRAN Radio Access Bearer): Concatenation of an S1 bearer and a data radio bearer corresponding to the S1 bearer. If the E-RAB is present, there is one-to-one mapping between the E-RAB and an EPS bearer of a NAS.
- GTP (GPRS Tunneling Protocol): A group of IP-based communication protocols used to carry a general packet radio service (GPRS) within GSM, UMTS, and LTE networks. In 3GPP architectures, GTP and proxy mobile IPv6 based interfaces are specified on various interface points. The GTP can be decomposed into some protocols (e.g., GTP-C, GTP-U, and GTP'). GTP-C is used within a GPRS core network for signaling between gateway GPRS support nodes (GGSN) and serving GPRS support nodes (SGSN). GTP-C allows the SGSN to activate a session on a user's behalf (e.g., PDN context activation), deactivate the same session, adjust quality of service parameters, or update a session for a subscriber that has just arrived from another SGSN. GTP-U is used to carry user data within the GPRS core network and between a radio access network and a core network. FIG. 1 is a schematic diagram showing the structure of an evolved packet system (EPS) including an evolved packet core (EPC).

The EPC is a core element of system architecture evolution (SAE) for improving performance of 3GPP technology. SAE corresponds to a research project for determining a network structure supporting mobility between various types of networks. For example, SAE aims to provide an optimized packet-based system for supporting various radio access technologies and providing an enhanced data transmission capability.

Specifically, the EPC is a core network of an IP mobile communication system for 3GPP LTE and can support real-time and non-real-time packet-based services. In conventional mobile communication systems (i.e. second-generation or third-generation mobile communication systems), functions of a core network are implemented through a circuit-switched (CS) sub-domain for voice and a packet-switched (PS) sub-domain for data. However, in a 3GPP LTE system which is evolved from the third generation communication system, CS and PS sub-domains are unified into one IP domain. That is, in 3GPP LTE, connection of terminals having IP capability can be established through an IP-based business station (e.g., an eNodeB (evolved Node B)), EPC, and an application domain (e.g., IMS). That is, the EPC is an essential structure for end-to-end IP services.

The EPC may include various components. FIG. 1 shows some of the components, namely, a serving gateway (SGW), a packet data network gateway (PDN GW), a mobility management entity (MME), a serving GPRS (general packet radio service) supporting node (SGSN) and an enhanced packet data gateway (ePDG).

The SGW (or S-GW) operates as a boundary point between a radio access network (RAN) and a core network and maintains a data path between an eNodeB and the PDN GW. When. When a terminal moves over an area served by an eNodeB, the SGW functions as a local mobility anchor point. That is, packets. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW (or P-GW) corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an unreliable network such as an interworking wireless local area network (I-WLAN) and a reliable network such as a code division multiple access (CDMA) or WiMax network.

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., a GPRS network).

The ePDG serves as a security node for a non-3GPP network (e.g., an I-WLAN, a Wi-Fi hotspot, etc.).

As described above with reference to FIG. 1, a terminal having IP capabilities may access an IP service network (e.g., an IMS) provided by an operator via various elements in the EPC not only based on 3GPP access but also on non-3GPP access.

Additionally, FIG. 1 shows various reference points (e.g. S1-U, SI-MME, etc.). In 3GPP, a conceptual link connecting two functions of different functional entities of an E-UTRAN and an EPC is defined as a reference point. Table 1 is a list of the reference points shown in FIG. 1. Various reference points may be present in addition to the reference points in Table 1 according to network structures.

**Table 1**

| Reference Point | Description |
|---|---|
| S1-MME | Reference point for the control plane protocol between E-UTRAN and MME. |
| S1-U | Reference point between E-UTRAN and Serving GW for the per bearer user plane tunneling and inter eNB path switching during handover. |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not |
| | established, it provides the user plane tunnelling. |
| S5 | It provides user plane tunnelling and tunnel management between Serving GW and PDN GW. It is used for Serving GW relocation due to UE mobility and if the Serving GW needs to connect to a non-collocated PDN GW for the required PDN connectivity. |
| S11 | Reference point between MME and Serving GW. |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses.) |

Among the reference points shown in FIG. 1, S2a and S2b correspond to non-3GPP interfaces. S2a is a reference point which provides reliable non-3GPP access and related control and mobility support between PDN GWs to a user plane. S2b is a reference point which provides related control and mobility support between the ePDG and the PDN GW to the user plane.

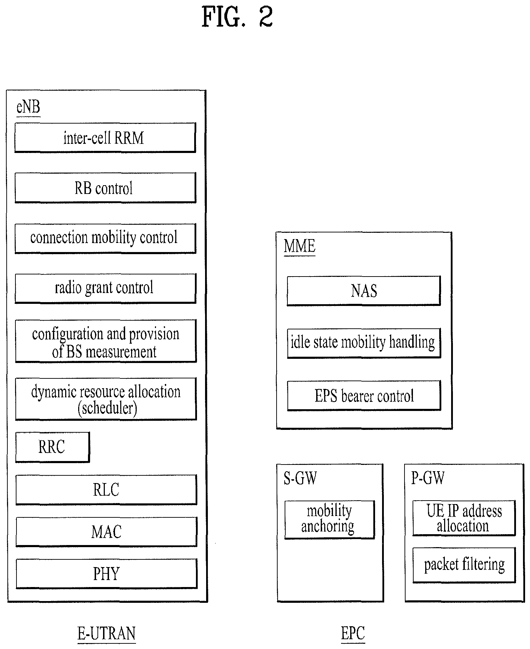

FIG. 2 is a diagram exemplarily illustrating architectures of a typical E-UTRAN and EPC.

As shown in the figure, while radio resource control (RRC) connection is activated, an eNodeB may perform routing to a gateway, scheduling transmission of a paging message, scheduling and transmission of a broadcast channel (BCH), dynamic allocation of resources to a UE on uplink and downlink, configuration and provision of eNodeB measurement, radio bearer control, radio admission control, and connection mobility control. In the EPC, paging generation, LTE_IDLE state management, ciphering of the user plane, SAE bearer control, and ciphering and integrity protection of NAS signaling.

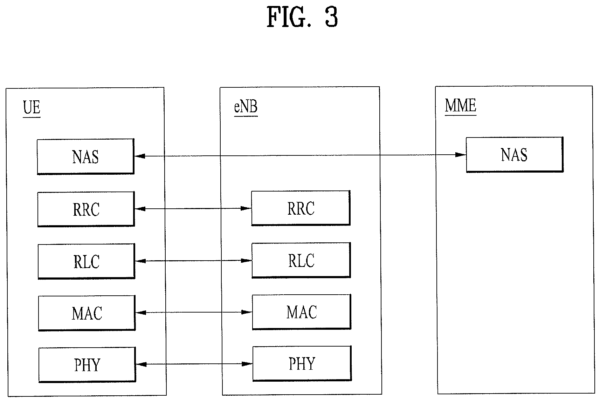

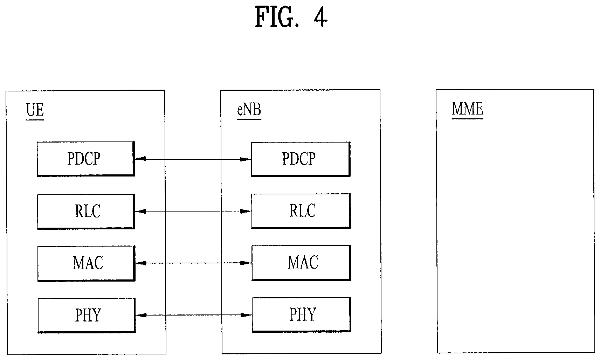

FIG. 3 is a diagram exemplarily illustrating the structure of a radio interface protocol in a control plane between a UE and an eNB, and FIG. 4 is a diagram exemplarily illustrating the structure of a radio interface protocol in a user plane between the UE and the eNB.

The radio interface protocol is based on the 3GPP wireless access network standard. The radio interface protocol horizontally includes a physical layer, a data link layer, and a networking layer. The radio interface protocol is divided into a user plane for transmission of data information and a control plane for delivering control signaling which are arranged vertically.

The protocol layers may be classified into a first layer (L1), a second layer (L2), and a third layer (L3) based on the three sublayers of the open system interconnection (OSI) model that is well known in the communication system.

Hereinafter, description will be given of a radio protocol in the control plane shown in FIG. 3 and a radio protocol in the user plane shown in FIG. 4.

The physical layer, which is the first layer, provides an information transfer service using a physical channel. The physical channel layer is connected to a medium access control (MAC) layer, which is a higher layer of the physical layer, through a transport channel. Data is transferred between the physical layer and the MAC layer through the transport channel. Transfer of data between different physical layers, i.e., a physical layer of a transmitter and a physical layer of a receiver is performed through the physical channel.

The physical channel consists of a plurality of subframes in the time domain and a plurality of subcarriers in the frequency domain. One subframe consists of a plurality of symbols in the time domain and a plurality of subcarriers. One subframe consists of a plurality of resource blocks. One resource block consists of a plurality of symbols and a plurality of subcarriers. A Transmission Time Interval (TTI), a unit time for data transmission, is 1 ms, which corresponds to one subframe.

According to 3GPP LTE, the physical channels present in the physical layers of the transmitter and the receiver may be divided into data channels corresponding to Physical Downlink Shared Channel (PDSCH) and Physical Uplink Shared Channel (PUSCH) and control channels corresponding to Physical Downlink Control Channel (PDCCH), Physical Control Format Indicator Channel (PCFICH), Physical Hybrid-ARQ Indicator Channel (PHICH) and Physical Uplink Control Channel (PUCCH).

The second layer includes various layers. First, the MAC layer in the second layer serves to map various logical channels to various transport channels and also serves to map various logical channels to one transport channel. The MAC layer is connected with an RLC layer, which is a higher layer, through a logical channel. The logical channel is broadly divided into a control channel for transmission of information of the control plane and a traffic channel for transmission of information of the user plane according to the types of transmitted information.

The radio link control (RLC) layer in the second layer serves to segment and concatenate data received from a higher layer to adjust the size of data such that the size is suitable for a lower layer to transmit the data in a radio interval.

The Packet Data Convergence Protocol (PDCP) layer in the second layer performs a header compression function of reducing the size of an IP packet header which has a relatively large size and contains unnecessary control information, in order to efficiently transmit an IP packet such as an IPv4 or IPv6 packet in a radio interval having a narrow bandwidth. In addition, in LTE, the PDCP layer also performs a security function, which consists of ciphering for preventing a third party from monitoring data and integrity protection for preventing data manipulation by a third party.

The Radio Resource Control (RRC) layer, which is located at the uppermost part of the third layer, is defined only in the control plane, and serves to configure radio bearers (RBs) and control a logical channel, a transport channel, and a physical channel in relation to reconfiguration and release operations. The RB represents a service provided by the second layer to ensure data transfer between a UE and the E-UTRAN.

If an RRC connection is established between the RRC layer of the UE and the RRC layer of a wireless network, the UE is in the RRC Connected mode. Otherwise, the UE is in the RRC Idle mode.

Hereinafter, description will be given of the RRC state of the UE and an RRC connection method. The RRC state refers to a state in which the RRC of the UE is or is not logically connected with the RRC of the E-UTRAN. The RRC state of the UE having logical connection with the RRC of the E-UTRAN is referred to as an RRC_CONNECTED state. The RRC state of the UE which does not have logical connection with the RRC of the E-UTRAN is referred to as an RRC_IDLE state. A UE in the RRC_CONNECTED state has RRC connection, and thus the E-UTRAN may recognize presence of the UE in a cell unit. Accordingly, the UE may be efficiently controlled. On the other hand, the E-UTRAN cannot recognize presence of a UE which is in the RRC_IDLE state. The UE in the RRC_IDLE state is managed by a core network in a tracking area (TA) which is an area unit larger than the cell. That is, for the UE in the RRC_IDLE state, only presence or absence of the UE is recognized in an area unit larger than the cell. In order for the UE in the RRC_IDLE state to be provided with a usual mobile communication service such as a voice service and a data service, the UE should transition to the RRC_CONNECTED state. A TA is distinguished from another TA by a tracking area identity (TAI) thereof. A UE may configure the TAI through a tracking area code (TAC), which is information broadcast from a cell.

When the user initially turns on the UE, the UE searches for a proper cell first. Then, the UE establishes RRC connection in the cell and registers information thereabout in the core network. Thereafter, the UE stays in the RRC_IDLE state. When necessary, the UE staying in the RRC_IDLE state selects a cell (again) and checks system information or paging information. This operation is called camping on a cell. Only when the UE staying in the RRC_IDLE state needs to establish RRC connection, does the UE establish RRC connection with the RRC layer of the E-UTRAN through the RRC connection procedure and transition to the RRC_CONNECTED state. The UE staying in the RRC_IDLE state needs to establish RRC connection in many cases. For example, the cases may include an attempt of a user to make a phone call, an attempt to transmit data, or transmission of a response message after reception of a paging message from the E-UTRAN.

The non-access stratum (NAS) layer positioned over the RRC layer performs functions such as session management and mobility management.

Hereinafter, the NAS layer shown in FIG. 3 will be described in detail.

The ESM (Evolved Session Management) belonging to the NAS layer performs functions such as default bearer management and dedicated bearer management to control a UE to use a PS service from a network.. The UE is assigned a default bearer resource by a specific packet data network (PDN) when the UE initially accesses the PDN. In this case, the network allocates an available IP to the UE to allow the UE to use a data service. The network also allocates QoS of a default bearer to the UE. LTE supports two kinds of bearers. One bearer is a bearer having characteristics of guaranteed bit rate (GBR) QoS for guaranteeing a specific bandwidth for transmission and reception of data, and the other bearer is a non-GBR bearer which has characteristics of best effort QoS without guaranteeing a bandwidth. The default bearer is assigned to a non-GBR bearer. The dedicated bearer may be assigned a bearer having QoS characteristics of GBR or non-GBR.

A bearer allocated to the UE by the network is referred to as an evolved packet service (EPS) bearer. When the EPS bearer is allocated to the UE, the network assigns one ID. This ID is called an EPS bearer ID. One EPS bearer has QoS characteristics of a maximum bit rate (MBR) and/or a guaranteed bit rate (GBR).

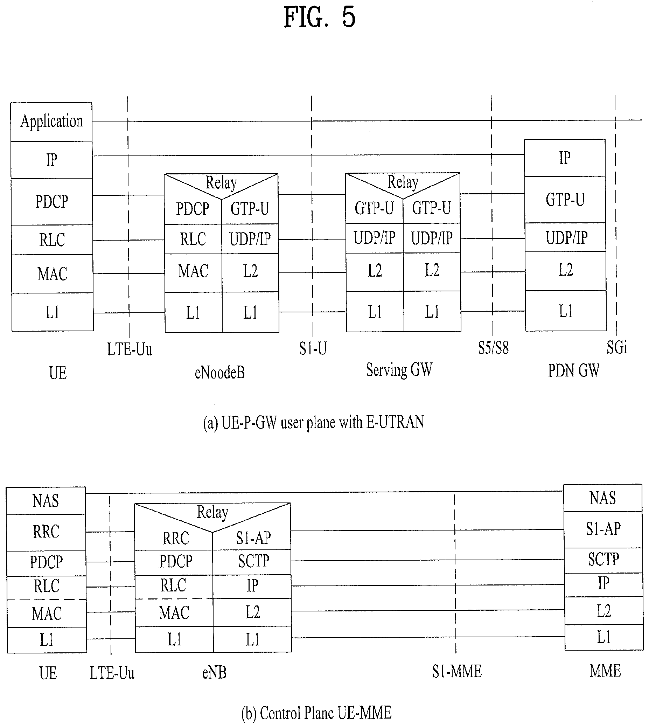

FIG. 5 illustrates LTE protocol stacks for a user plane and a control plane. FIG. 5(a) illustrates user plane protocol stacks over UE-eNB-SGW-PGW-PDN and FIG. 5(b) illustrates control plane protocol stacks over UE-eNB-MME-SGW-PGW. Functions of key layers of the protocol stacks will now be briefly described below.

Referring to FIG. 5(a), a GTP-U protocol is used to forward user IP packets over an S1-U/S5/X2 interface. If a GTP tunnel is established to forward data during LTE handover, an end marker packet is transferred to the GTP tunnel as the last packet.

Referring to FIG. 5(b), an S1-AP protocol is applied to an S1-MME interface. The S1-AP protocol supports functions such as S1 interface management, E-RAB management, NAS signaling delivery, and UE context management. The S1-AP protocol transfers an initial UE context to the eNB in order to set up E-RAB(s) and then manages modification or release of the UE context. A GTP-C protocol is applied to S11/S5 interfaces. The GTP-C protocol supports exchange of control information for generation, modification, and termination of GTP tunnel(s). The GTP-C protocol generates data forwarding tunnels in the case of LTE handover.

A description of the protocol stacks and interfaces illustrated in FIGs. 3 and 4 is applicable to the same protocol stacks and interfaces illustrated in FIG. 5.

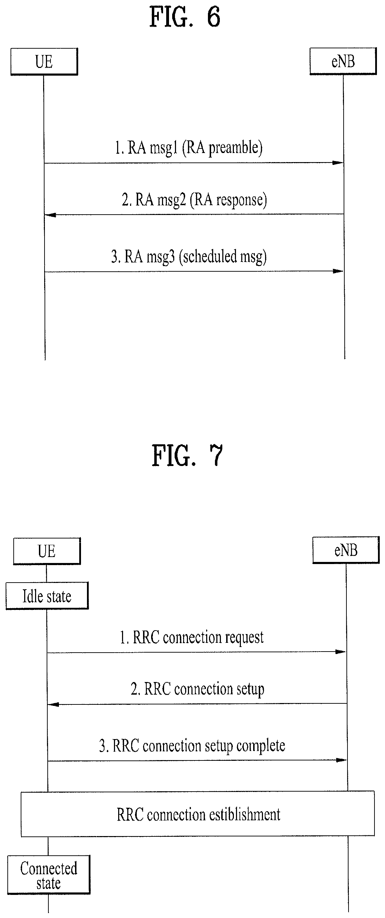

FIG. 6 is a flowchart illustrating a random access procedure in 3GPP LTE.

The random access procedure is used for a UE to obtain UL synchronization with a base station or to be assigned a UL radio resource.

The UE receives a root index and a physical random access channel (PRACH) configuration index from an eNB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The random access procedure, in particular, a contention-based random access procedure, includes the following three steps. Messages transmitted in the following steps 1, 2, and 3 are referred to as msg1, msg2, and msg4, respectively.
> 1. The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.
> 2. Upon receiving the random access preamble, the eNB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH. The RAR includes timing advance (TA) information indicating timing offset information for UL synchronization, UL resource allocation information (UL grant information), and a temporary UE identifier (e.g., a temporary cell-RNTI (TC-RNTI)).
> 3. The UE may perform UL transmission according to resource allocation information (i.e., scheduling information) and a TA value in the RAR. HARQ is applied to UL transmission corresponding to the RAR. Accordingly, after performing UL transmission, the UE may receive reception response information (e.g., a PHICH) corresponding to UL transmission.

FIG. 7 illustrates a connection procedure in a radio resource control (RRC) layer.

As shown in FIG. 7, the RRC state is set according to whether or not RRC connection is established. An RRC state indicates whether or not an entity of the RRC layer of a UE has logical connection with an entity of the RRC layer of an eNB. An RRC state in which the entity of the RRC layer of the UE is logically connected with the entity of the RRC layer of the eNB is called an RRC connected state. An RRC state in which the entity of the RRC layer of the UE is not logically connected with the entity of the RRC layer of the eNB is called an RRC idle stat.

A UE in the connected state has RRC connection, and thus the E-UTRAN may recognize presence of the UE in a cell unit. Accordingly, the UE may be efficiently controlled. On the other hand, the eNB cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, does the UE establish RRC connection with the RRC layer of the eNB through the RRC connection procedure and then transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNB, transmission of an RRC connection setup message from the eNB to the UE, and transmission of an RRC connection setup complete message from the UE to eNB, which are described in detail below with reference to FIG. 7.
> 1. When the UE in the idle state desires to establish RRC connection for reasons such as an attempt to make a call, a data transmission attempt, or a response of the eNB to paging, the UE transmits an RRC connection request message to the eNB first.
> 2. Upon receiving the RRC connection request message from the UE, the eNB accepts the RRC connection request of the UE when the radio resources are sufficient, and then transmits an RRC connection setup message, which is a response message, to the UE.
> 3. Upon receiving the RRC connection setup message, the UE transmits an RRC connection setup complete message to the eNB.

Only when the UE successfully transmits the RRC connection setup complete message, does the UE establish RRC connection with the eNB and transition to the RRC connected mode.

The RRC connection may be re-established. The RRC connection re-establishment procedure is to re-establish the RRC connection, which involves resumption of SRB1 operation, re-activation of security, and PCell-only configuration. A UE in an RRC_CONNECTED state for which security is activated may initiate this procedure to continue the RRC connection. According to section 5.3.7 of 3GPP TS 36.331, RRC connection re-establishment may be performed in the following cases.
1> Upon detection of radio link failure; or
1> Upon handover failure; or
1> Upon mobility from E-TRAN failure; or
1> Upon integrity check failure indication from lower layers; or
1> Upon RRC connection reconfiguration failure.

When re-establishment of the RRC connection fails for reasons other than radio link failure, for example, when T311 expires, the RRC layer of the UE transitions to RRC_IDLE and transmits "RRC connection failure" to an upper layer.

Conventional RRC connection re-establishment is performed with the access stratum (AS) security activated except for the case of radio link failure. In the case of radio link failure, re-establishment of RRC connection may depend on whether AS security is activated or not. If AS security is not activated at the time of radio link failure, the RRC layer transitions to RRC_IDLE and transmits "other" to a upper layer (for example, the NAS layer) as a release cause. In this case, neither NAS recovery nor RRC re-establishment is performed. If AS security is activated, the RRC connection re-establishment procedure is performed, as described in section 5.3.7 of 3GPP TS 36.331.

In order for the UE of an idle state to transition to an activation state in which traffic transmission/reception can be performed due to occurrence of new traffic, a service request procedure is performed. If traffic to be transmitted by the UE occurs or traffic to be transmitted to the UE by a network occurs in a state in which the UE is registered with the network but an S1 connection is released and a wireless resource is not allocated to the UE due to traffic inactivation, i.e., in a state in which the UE is in an EMM registered state (EMM-Registered) but is in an ECM-Idle state, the UE requests that the network provide a service. Upon successfully completing the service request process, the UE transitions to an ECM connected state (ECM-Connected) and configures an ECM connection (RRC connection + S1 signaling connection) in a control plane and an E-RAB (a data radio bearer (DRB) and an S1 bearer) in a user plane, thereby transmitting/receiving traffic. If the network desires to transfer traffic to the UE of an ECM idle state (ECM-Idle), the network informs the UE, through a paging message, that there is traffic to be transmitted so that the UE may request that the network provide a service.

Hereinafter, the network triggered service request procedure will be described in brief. If an MME has or needs to transmit downlink data or signals to an UE in the ECM-IDLE state, for example, if the MME needs to perform the MME/HSS-initiated detach procedure for the ECM-IDLE mode UE or an S-GW receives control signaling (e.g. Create Bearer Request or Modify Bearer Request), the MME starts the network triggered service request procedure. When the S-GW receives Create Bearer Request or Modify Bearer Request for a UE in the state that idle mode signaling reduction (ISR) is activated, the S-GW does not have a downlink S1-U, and an SGSN has notified the S-GW that the UE has moved to an PMM-IDLE or STANDBY state, the S-GW buffers signaling messages and transmits Downlink Data Notification to trigger the MME and SGSN to page the UE. If the S-GW is triggered to send second Downlink Data Notification for a bearer with higher priority (i.e. ARP priority level) than that for which the first Downlink Data Notification was sent while waiting for the user plane to be established, the S-GW sends a new Downlink Data Notification message indicating the higher priority to the MME. If the S-GW receives additional downlink data packets for a bearer with same or higher priority than that for which the first Downlink Data Notification was sent, or if after sensing a second Downlink Data Notification message indicating the higher priority, the S-GW receives additional downlink data packets for the UE, the S-GW buffers these downlink data packets and does not send new Downlink Data Notification. The S-GW will be notified about the current RAT type based on a UE triggered service request procedure. In addition, the S-GW will keep executing a dedicated bearer activation or dedicated bearer modification procedure. That is, the S-GW will send corresponding buffered signaling to the MME or SGSN where UE resides in now and inform a P-GW of the current RAT type if the RAT type has been changed compared to the last reported RAT Type. If dynamic PCC is deployed, the current RAT type information can be conveyed from the P-GW to a PCRF. If PCRF response leads to EPS bearer modification, the P-GW initiates a bearer update procedure. When sending the Downlink Data Notification, the S-GW includes both an EPS bearer ID and ARP. If the Downlink Data Notification is triggered by the arrival of downlink data packets at the S-GW, the S-GW includes an EPS bearer ID and ARP associated with the bearer through which the downlink data packet was received. If the Downlink Data Notification is triggered by the arrival of control signaling and if the control signaling includes an EPS bearer ID and ARP, the S-GW includes the corresponding EPS bearer ID and APR. If the ARP is not present in the control signaling, the S-GW includes an ARP in a stored EPS bearer context. When a local gateway (L-GW) receives downlink data for a UE in the ECM-IDLE state, if a LIPA PDN connection exists, the L-GW sends the first downlink user packet to the S-GW and buffers all other downlink user packets. The S-GW triggers the MME to page the UE. Details of the network triggered service request procedure can be found in section 5.3.4.3 of 3GPP TS 23.401.

Meanwhile, when a UE has traffic to be transmitted, the UE sends to an eNB an RRC connection request through a random access procedure including steps 1) to 3) of FIG. 7. When the eNB accepts the RRC connection request from the UE, the eNB sends an RRC Connection Setup message to the UE. Upon receiving the RRC Connection Setup message, the UE sends an RRC Connection Setup Complete message to the eNB by including a service request in the message. For details related to the procedure of requesting a UE trigger service, refer to section 5.3.4.1 of the document of 3GPP TS 23.401.

Recently, machine type communication (MTC) has come to the fore as a significant communication standard issue. MTC refers to exchange of information between a machine and an eNB without involving persons or with minimal human intervention. For example, MTC may be used for data communication for measurement/sensing/reporting such as meter reading, water level measurement, use of a surveillance camera, inventory reporting of a vending machine, etc. and may also be used for automatic application or firmware update processes for a plurality of UEs. In MTC, the amount of transmission data is small and UL/DL data transmission or reception (hereinafter, transmission/reception) occurs occasionally. In consideration of such properties of MTC, it would be better in terms of efficiency to reduce production cost and battery consumption of UEs for MTC (hereinafter, MTC UEs) according to data transmission rate. Since the MTC UE has low mobility, the channel environment thereof remains substantially the same. If an MTC UE is used for metering, reading of a meter, surveillance, and the like, the MTC UE is very likely to be located in a place such as a basement, a warehouse, and mountain regions which the coverage of a typical eNB does not reach. In consideration of the purposes of the MTC UE, it is better for a signal for the MTC UE to have wider coverage than the signal for the conventional UE (hereinafter, a legacy UE).

It is expected that a number of devices will be wirelessly connected to each other through the Internet of Things (IoT). The IoT means internetworking of physical devices, connected devices, smart devices, buildings, and other items with electronics, software, sensors, actuators, and network connectivity that enable these objects to collect and exchange data. In other words, the IoT refers to a network of physical objects, machines, people, and other devices that enable connectivity and communication for the purpose of exchanging data for intelligent applications and services. The IoT allows objects to be sensed and controlled remotely through existing network infrastructures, thereby providing opportunities for the direct integration between the physical and digital worlds, which result in improving efficiency, accuracy and economic benefits. Particularly, in the present invention, the IoT using the 3GPP technology is referred to as cellular IoT (CIoT). In addition, the CloT that transmits/receives IoT signals using a narrowband (e.g., a frequency band of about 200 kHz) is called NB-IoT.

The CloT is used to monitor traffic transmitted over a relatively long period, e.g., from a few decades to a year (e.g., smoke alarm detection, power failure notification from smart meters, tamper notification, smart utility (gas/water/electricity) metering reports, software patches/updates, etc.) and support 'IoT' devices characterized as ultra-low complexity, power limitation and low data rates.

In the prior art, a connection should be established with the network to transmit data to an EMM-Idle mode UE. To this end, the UE should successfully complete the service request procedure, but it is not suitable for the CloT that requires optimized power consumption for the low data rate. To transmit data to an application, two types of optimization: User Plane CloT EPS optimization and Control Plane CloT EPS optimization has been defined for the CloT in the EPS.

The User Plane CloT EPS optimization and Control Plane CIoT optimization can be referred to U-plane CloT EPS optimization and C-plane CloT EPS optimization, respectively.

Control plane CloT EPS optimization is signaling optimization that enables efficient transport of user data (IP, non-IP, or SMS) on the control plane. In the case of a Control Plane CloT EPS optimization solution, there is no setup data radio bearer, but data packets are transmitted through signaling radio bearers. Thus, this solution is most suitable for transmission of infrequent small data packets. When a UE and MME use the Control Plane CloT EPS optimization, the UE and MME may transfer IP or non-IP data through NAS signaling depending on data types selected for a PDN connection supported at PDN connection establishment. The Control Plane CloT EPS optimization can be achieved by using NAS transport capabilities of RRC and S1-AP protocols and data transfer through GTP (Evolved General Packet Radio Service (GPRS) Tunneling Protocol) tunnels between an MME and an S-GW and between an S-GW and a P-GW.

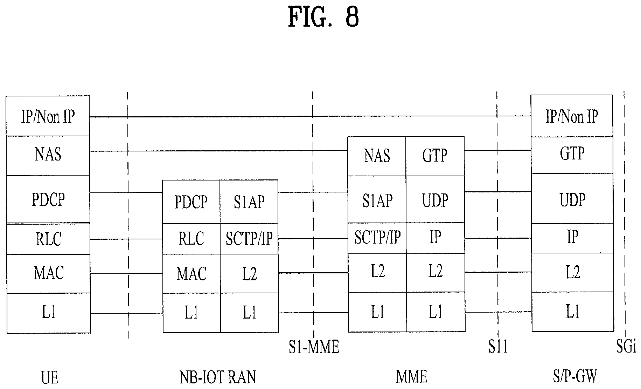

FIG. 8 illustrates mobile terminated data transfer in the Control Plane CloT EPS optimization.

In FIG. 8, GTP-u is a protocol which tunnels user data between MME and the S GW as well as between the S GW and the P GW in the backbone network. GTP encapsulates all end user packets. UDP/IP are the backbone network protocols used for routing user data and control signalling. NAS is the Non Access Stratum Layer used to carry Data between UE and MME and may include Header compression and security functions of user plane IP data.

A CloT network or technology refers to providing an optimized communication service to an IoT UE mainly in terms of a core network and a narrowband Internet of things (NB-IoT) network or technology refers to optimizing a radio interface of legacy LTE technology for IoT.

As known by the name of NB-IoT, NB-IoT is radio technology for providing an IoT service using a narrowband frequency of about 200 kHz. As compared with legacy LTE technology using a frequency band of a minimum of 1.25 MHz, NB-IoT uses a significantly narrow frequency band. Therefore, processing power can be minimized and power consumption can be minimized in terms of the UE.

CloT is technology for minimizing power consumption of the UE through a scheme in which an MME processes data (C-plane solution) or a scheme in which the UE and the eNB maintain a context and use the context for the next connection (U-plane solution) even when the UE is in a state similar to an RRC_IDLE state, in order to solve waste of power of the UE caused by exchange of numerous messages in a legacy attach procedure or service request procedure.

Therefore, NB-IoT radio technology and CloT technology are individually applicable. That is, even when the NB-IoT radio technology is not used, it is possible to apply the CloT technology through a legacy LTE radio network. This means that the CloT technology is applicable to a UE incapable of using the NB-IoT radio technology, for example, a UE which has already been released by applying only the LTE radio technology. This also means that a cell based on the legacy LTE radio technology may support a legacy LTE UE such as a smartphone and simultaneously support an IoT UE.

The mode in which the UE uses the S1 interface between the RAN and the core network is referred to as an S1 mode. In the S1 mode, the UE accesses a network service via the E-UTRAN. For the multi-access system, the S1 mode is divided into a WB-S1 mode and an NB-S1 mode depending on the current RAN.

In the multi-access system, when the current serving E-UTRA provides the S1 mode by NB-IoT, it is said that operation is performed in the NB-S1 mode (see 3GPP TS 24.301, 3GPP TS 36.300, 3GPP TS 36.331, and 3GPP TS 36.306). In the case of the multiple-access system, when the system operates in the S1 mode, not in the NB-S1 mode, it is said that the system operates in the WB-S1 mode. In other words, the CloT mode includes the WB-S1 mode and the NB-S1 mode. The NB-IoT corresponds to the NB-S1 mode and the remaining CIoT, i.e., CloT including the legacy LTE except NB-IoT, may correspond to the WB-S1.

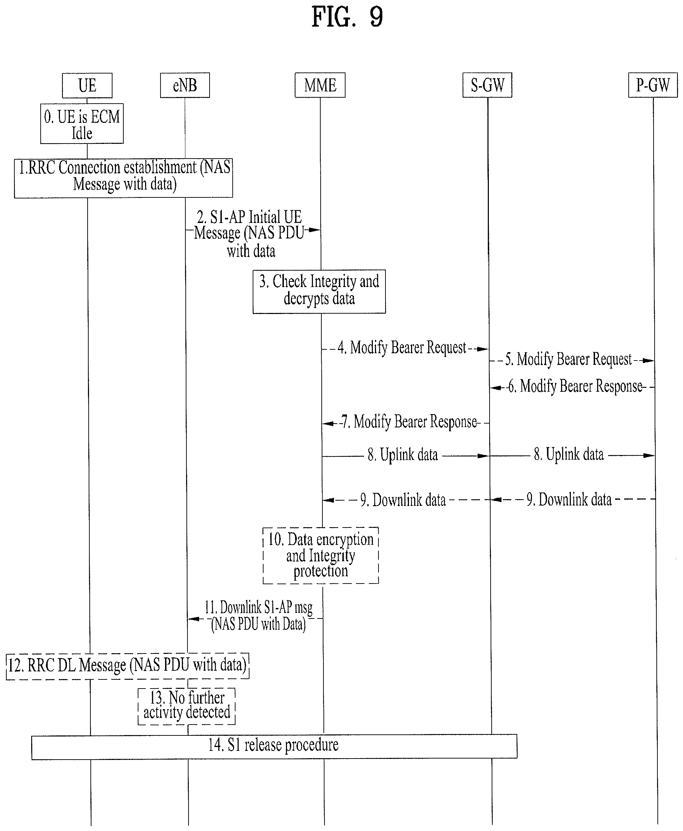

FIG. 9 illustrates a procedure of transporting mobile originated data in control plane CloT EPS optimisation.
> 0. The UE is ECM-IDLE.
> 1. The UE establishes a RRC connection and sends as part of it uplink (UL) data encrypted and integrity protected in a NAS message. The UE may also indicate, in the NAS message, Release Assistance Information on whether downlink (DL) data transmission (e.g. acknowledgements or responses to UL data) subsequent to the UL data transmission is expected or not. The UE may also indicate whether the S1 connection has to be released when DL data is received.
> 2. The NAS message sent in step 1 is relayed to the MME by the eNB using a S1-AP Initial UE message.
> 3. The MME checks the integrity of the incoming NAS message PDU and decrypts the data the NAS message PDU contains. The MME also determines whether the data delivery will use SGi or SCEF-based delivery at this stage.
> 4. If the S11-U connection is not established, the MME sends a Modify Bearer Request message (including MME address, MME TEID DL, Delay Downlink Packet Notification Request, RAT Type) to the S-GW. The S-GW is now able to transmit downlink data towards the UE. If the PDN GW requested UE's location and/or User CSG information and the UE's location and/or User CSG information has changed, the MME includes the User Location Information IE and/or User CSG Information IE in this message. If the Serving Network IE has changed compared to the last reported Serving Network IE then the MME also includes the Serving Network IE in this message. If the UE Time Zone has changed compared to the last reported UE Time Zone then the MME includes the UE Time Zone IE in this message.
> 5. If the RAT Type has changed compared to the last reported RAT Type or if the UE's Location and/or Info IEs and/or UE Time Zone and Serving Network ID are present in step 4, the S-GW shall send the Modify Bearer Request message (RAT Type) to the PDN GW. User Location Information IE and/or User CSG Information IE and/or Serving Network IE and/or UE Time Zone are also included if they are present in step 4.
   If the Modify Bearer Request message is not sent because of above reasons and the PDN GW charging is paused, then the S-GW sends a Modify Bearer Request message with PDN Charging Pause Stop Indication to inform the PDN GW that the charging is no longer paused. Other IEs are not included in this message.
> 6. The PDN GW sends the Modify Bearer Response to the S-GW.
> 7. The S-GW returns a Modify Bearer Response (Serving GW address and TEID for uplink traffic) to the MME as a response to a Modify Bearer Request message.
> 8. The MME sends UL data to the P-GW via the S-GW.
> 9. If no downlink data are expected based on the Release Assistance Information from the UE in step 1, the MME immediately releases the connection and therefore step 14 is executed. Otherwise, DL data may arrive at the P-GW and the P-GW sends the DL data to the MME. If no data is received, steps 11-13 are skipped. While the RRC connection is active, the UE may still send UL data in NAS messages that are carried in a S1AP uplink message (not shown in FIG. 9). At any time the UE may provide Release Assistance Information with the UL data.
> 10. If DL data are received in step 9, the MME encrypts and integrity protects the DL data.
> 11. If step 10 is executed then DL data are encapsulated in a NAS message and sent to the eNB in a S1-AP DL message. If the Release Assistance Information was received with UL data and it indicated a request to release the RRC connection upon DL data reception, the MME also includes in the S1-AP message an indication that the eNB shall release the RRC connection after successfully sending data to the UE.
> 12. The eNB sends a RRC DL data including the DL data encapsulated in NAS PDU. This may include a request to immediately release the RRC connection if in step 11 the S1-AP message includes in the Release Assistance Information a request to tear down the RRC connection if DL data are received. If so step 14 is immediately executed.
> 13. If no NAS activity exists for a while, the eNB starts an S1 release in step 14.
> 14. An S1 release procedure according to section 5.3.5 of 3GPP TS 23.401.

The S1 release procedure is used to release all S1 bearers (within S1-U) and the logical S1-AP signaling connection (across S1-MME) for the UE. The S1 release procedure releases the S11-U bearer in control plane CloT EPS optimization. The S1 release procedure switches the UE from the ECM-CONNECTED state to the ECM-IDLE state in both the UE and the MME, and all the UE-related context information is deleted from the eNB. If the S1-AP signaling connection is lost due to loss of signaling transport or due to eNB/MME failure, the S1 release procedure is performed locally by the eNB and the MME. When the S1 release procedure is performed locally by the eNB or the MME, each node locally performs actions of the S1 release procedure without using or depending on any signaling that is directly provided between the eNB and the MME.

The tracking area update (TAU) procedure is always initiated by the UE and used for various purposes. For example, the TAU procedure is used for a normal TAU for updating the registration of the actual tracking area of the UE in the network, a combined TAU for updating the registration of the actual tracking area of the operation of CS/PS mode 1 or CS/PS mode 2, a Periodic TAU to periodically inform the network about the availability of the UE, and recovery from any error cases, and the like. The conditions for the UE to initiate the TAU procedure are specified in 3GPP TS 24.301. For example, the conventional 3GPP TS 24.301 document relating to initiation of the normal and periodic TAU procedures specifies that the TAU procedure should be initiated by sending a TAU request message to the MME when the UE in the EMM-REGISTERED state is in Case i:

Case i. when the UE receives an indication of "RRC Connection failure" from the lower layers and has no signalling or user uplink data pending (i.e., when the lower layer requests NAS signalling connection recovery).

This is because the situation of Case i may cause a mismatch in EMM mode between the network and the UE. For example, when a NAS signaling connection between the UE in the EMM-IDLE mode and the network (e.g., MME) is established, the UE switches to the EMM-CONNECTED mode and the network remembers the UE in the EMM-CONNECTED mode. In this case, if the UE in the EMM-CONNECTED mode locally switches to the EMM-IDLE mode due to radio link failure, the network still regards the UE as being in the EMM-CONNECTED mode, and therefore a mismatch in EMM mode occurs between the UE and the network. Once this mismatch occurs, the network may transmit DL data to the UE because the network considers the UE to be in the EMM-CONNECTED mode although the UE is in the EMM-IDLE mode. In this case, the DL data cannot be delivered to the UE and may be lost. A more detailed description is given below. Since the network considers that the UE is in the EMM-CONNECTED mode, the S-GW may forward DL data directly to the eNB and the eNB may send the DL data. However, the DL data may be lost because the UE cannot receive the DL data. Further, DL signaling (e.g., the release message) cannot be delivered to the UE. Thus, when the situation of Case i takes place, the UE initiates the TAU procedure for NAS signaling connection recovery.

Suppose that the UE uses a C-plane solution. In step 1 of FIG. 9, the UE (the NAS layer) is switched from the EMM-IDLE (i.e., ECM-IDLE) state to the EMM-CONNECTED (i.e., ECM-CONNECTED) state. That is, after transmitting UL data in step 1 of FIG. 9, the UE does not immediately switch to the EMM-IDLE state even when there is no data or signaling to be transmitted anymore, but remains in the EMM-CONNECTED state until the network sends an S1 release request thereto. Accordingly, when radio link failure occurs before the S1 release procedure is performed in step 14 of FIG. 9, the NAS layer of the UE performs the NAS recovery procedure according to the related art, i.e., the Tracking Area Update (TAU) procedure according to section 5.5.3 of 3GPP TS 24.301.

The UE (the NAS layer) may transmit the release assistance information together with the UL data in step 1 of FIG. 9. The release assistance information indicates whether there is ack or response to the UL data or whether or not S1 release should be performed when the DL data is received. The operation of the MME having received the release assistance information together with the UL data is described in step 9 of FIG. 9. If the DL data is not expected, the S1 release procedure (step 14 in FIG. 9) is performed. If the DL data is expected, the MME waits until the DL data arrives, without performing the S1 release procedure (step 14 in FIG. 9). Thereafter, if the DL data does not arrive before the inactivity timer of the eNB expires, the eNB performs S1 release (step 13 in FIG. 9). In the case where the UE desires/expects only one UL data transmission, transmits the UL data through one NAS PDU, indicates this through the release assistance information (or a separate information element (IE) or indication), and requests S1 release just after the uplink data transmission, it is unnecessary for the NAS layer of the UE to perform the NAS recovery procedure according to the conventional technology if the RLF occurs before step 14 of FIG. 9 is performed. The NAS layer of the UE does not need to recover connection to the network through the NAS recovery procedure when it has neither UL data to send nor DL data to receive from the network. In this case, signaling overhead and power consumption are caused by the unnecessary NAS recovery procedure. That is, if the UE is using a CP-solution, NAS recovery may be unnecessary.

For example, the UE may not need to perform NAS recovery for the DL for NB-IoT. In the case of NB-IoT, radio link failure is likely to occur when the UE is inactive due to the short transmission pattern of NB-IoT traffic. Therefore, performing the TAU even when there is high possibility that there is no DL data may be very costly, particularly in coverage enhancement deployment. Furthermore, in NB-IoT, UE power savings may be more important than reachability, latency, and tolerance, compared to the legacy LTE. Therefore, even if mismatch between the network and the UE due to Case i cannot be completely solved, the only effect is that the UE is not reachable (i.e., no DL transmission is allowed) until the next UL transmission (e.g., NAS signaling such as such TAU or periodic TAU and data transmission) arrives, and this effect may be acceptable.

However, in the case where there is subsequent data, there is a risk that subsequent data will be lost if NAS recovery is not performed collectively because the UE is an IoT UE when radio link failure occurs or the RRC connection establishment procedure may need to be restarted from the beginning to transmit the subsequent data, which causes inconvenience.

Therefore, when a radio link failure occurs in the UE using the CP-solution, initiation of the TAU procedure is not collectively interrupted even if the access stratum (AS) does not attempt to re-establish the RRC connection. Rather, NAS recovery may be necessary when there is at least subsequent data transmission. When radio link failure occurs, the existing release cause value "RRC connection failure" may be used as a cause value indicating, to the NAS layer of the UE using the CP-solution, that NAS recovery should be initiated. That is, in the case where the RRC layer of the UE detects a radio link failure, when the RRC layer informs the NAS layer of the UE of the "RRC connection failure", the NAS layer may determine whether to initiate the NAS recovery procedure depending on the state of the UE.

In the case of user plane CloT EPS optimization, NAS recovery may be triggered just as in legacy LTE. In other words, if Case i described above occurs among the conditions for initiating the TAU procedure for the UE which is using the UP-solution, NAS recovery may be triggered and the UE may initiate the TAU procedure by sending a TAU request to the MME.

It is necessary to discuss whether NAS signaling connection recovery is indeed necessary in the case of radio link failure in a CP-solution. Considering that the typical traffic model for small data transmission is '1 UL transmission' or '1 UL transmission + 1 DL transmission', the following may be specified. In the case of a single UL transmission, the NAS layer of the UE which transmits only a small amount of data may not perform NAS recovery if there is a high possibility that there is no DL. If DL transmission is expected, the NAS layer of the UE may perform NAS recovery. If the UE does not have a NAS signaling connection, subsequent DL data will be lost at the network side (e.g., eNB) since the network will still consider the UE to be in the EMM-CONNECTED mode. If the UE does not receive the expected DL traffic (response or ack), the UE may need to retransmit the previous UL data, considering that the previous UL data transmission has failed. Such retransmission may place signaling burdens on upper layers (e.g., application layer or NAS layer), compared to the NAS signaling connection recovery. This may be related to larger battery consumption of the UE and additionally make the network to re-attempt to transmit the DL data to the UE.

In consideration of this situation, the present invention proposes an efficient NAS recovery procedure when control plane optimization is used in the CloT network. The present invention may be applied to all CloTs regardless of the type of CIoT. However, the proposal(s) of the present invention may be limited so as to be applied (only) when the UE is registered in (or camped on) the NB-IoT RAT. Alternatively, the proposal(s) of the present invention may be limited to being applied (only) when the UE uses CP optimization (only). Hereinafter, it is assumed that the UE or the NAS layer of the UE of the present invention is in the following situation:

The UE receives an indication of "RRC Connection failure" from a lower layer and there is no pending signaling or user UL data (i.e., when the lower layer requests NAS signaling connection recovery).

That is, the present invention assumes that the UE is in the situation of Case i described above. Hereinafter, the situation of Case i is referred to as "NAS signaling recovery status" and the present invention for NAS signaling connection recovery for C-plane optimization is described.

### <Condition for determining whether UE (NAS layer) performs NAS recovery Procedure>

The UE (NAS layer) in the NAS signaling recovery status may determine/decide whether to perform the NAS recovery procedure according to its state. For example, the UE or the NAS layer of the UE may be in the following state:
1. Whether the UE or the NAS layer of the UE is currently waiting/expecting DL data (ack or response) (or has notified the network (MME) that DL data (ack or response) is expected at the time of transmission of a NAS message containing UL data);
2. Whether the UL data to be sent is present/expected (or whether the network (MME) has been informed that subsequent UL data is present/expected at the time of transmission of the NAS message containing the UL data); and/or
3. Whether a request has been made to the network (MME) for performing S1 release just after the uplink data transmission at the time of transmission of the NAS message containing the UL data.

### <Event memorization/storage for determining whether or not the NAS recovery procedure of the UE (NAS layer) is performed>

In order to determine whether the UE (or the NAS layer of the UE) satisfies the condition for performing NAS recovery, the UE (NAS layer) may store the information that is delivered to the network (e.g., MME) in transmitting the NAS message containing the UL data. For example, the UE (the NAS layer) may memorize/store the following information:
1. Whether the UE (the NAS layer) has informed the network (MME), when transmitting a NAS message containing UL data, that DL data (ack or response) is expected;
2. Whether the UE (the NAS layer) has informed the network (MME), when transmitting the NAS message containing UL data, that subsequent UL data is present/expected; and/or
3. Whether the UE (the NAS layer) has informed the network (MME), when transmitting the NAS message containing UL data, that S1 release should be performed just after uplink data transmission.

For reference, as mentioned in step 9 of FIG. 9, after the UE transmits UL data in a NAS PDU in step 1, it may transmit other UL data in the NAS PDU. As described above, not only one-time NAS PDU transmission, but also continuous UL data transmission is considered. In the case of the continuous UL data, an indication may be sent at the time of UL data transmission such that the MME does not immediately release S1. In summary, in transmitting the NAS PDU including the UL data in step 1 of FIG. 9, the UE may transmit the following release assistance information (or a separate IE or indication) as well.
* Case 1: Whether DL data is expected (i.e., whether downlink data transmission (e.g., acknowledgment of or response to uplink data) is expected after uplink data transmission).
   - A. DL data expected.
   - B. DL data not expected.
* Case 2. Whether S1 connection release is immediately requested.
   - A. S1 connection release requested just after uplink data transmission.
   - B. S1 connection release not requested just after uplink data transmission.
* Case 3. Whether there is subsequent UL data.
   - A. There is subsequent UL data.
   - B. There is no subsequent UL data.

Case 3 may be implemented in various ways. For example, an end mark may be provided only to a NAS message including the last UL data. It is assumed that the operation of the UE is variable depending on the implementation method, and the MME is capable of understanding the meaning of the operation. Information about Case 1, information about Case 2, and information about Case 3 may be transmitted together, or only a part thereof may be transmitted.

### <Determination of whether UE (NAS layer) performs NAS recovery procedure and operation therefor>

### * Not performing the NAS recovery procedure

The UE (NAS layer) in the NAS signaling recovery status may or may not perform the NAS recovery procedure according to the state thereof. For example, the UE (the NAS layer) in the NAS signaling recovery status does not perform the NAS recovery procedure in one of the following case(s):
1-1) The UE (NAS layer) is not waiting for/expecting DL data (ack or response) (or the UE (NAS layer) has not informed the network (MME) that DL data (ack or response) is expected, when transmitting an NAS message containing UL data);
1-2) No UL data to be sent is currently present/expected (or the UE (NAS layer) has not informed the network (MME) that subsequent UL data is present/expected, when transmitting the NAS message containing UL data); and/or
1-3) The UE (NAS layer) has made a request that the network (MME) perform S1 release just after the uplink data transmission, when transmitting the NAS message containing the UL data.

If all the conditions 1-1), 1-2) and 1-3) above are satisfied, the UE may not perform the NAS recovery procedure. Alternatively, the UE may not perform the NAS recovery procedure if some of the conditions 1-1), 1-2) and 1-3) are satisfied. For example, if condition 1-3) is satisfied, the UE may not perform the NAS recovery procedure. As another example, when conditions 1-1) and 1-2) are satisfied, the UE may perform the NAS recovery procedure. In cases other than the cases suggested in conditions 1-1), 1-2) and 1-3), the UE performs the NAS recovery procedure.

### * Performing the NAS recovery procedure

The UE (NAS layer) in the NAS signaling recovery status may or may not perform the NAS recovery procedure according to the state thereof. For example, the UE (the NAS layer) in the NAS signaling recovery status performs the NAS recovery procedure in one of the following case(s):
2-1) The UE (NAS layer) is waiting for/expecting DL data (ack or response) (or the UE (NAS layer) has not informed the network (MME) that DL data (ack or response) is expected, when transmitting a NAS message containing UL data);
2-2) UL data to be sent is currently present/expected (or the UE (NAS layer) has not informed the network (MME) that subsequent UL data is present/expected, when transmitting the NAS message containing UL data); and/or
2-3) The UE (NAS layer) has not made a request that the network (MME) perform S1 release just after the uplink data transmission, when transmitting the NAS message containing the UL data.

If all conditions 2-1), 2-2) and 2-3) above are satisfied, the UE may perform the NAS recovery procedure. Alternatively, the UE may perform the NAS recovery procedure if some of conditions 2-1), 2-2) and 2-3) are satisfied.

### <Examples related to subsection 5.5.3.2.2 of 3GPP TS 24.301>

Subsection 5.5.3.2.2 of 3GPP TS 24.301 on initiation of normal and periodic TAU procedures requires that the UE in the EMM-REGISTERED state initiate the TAU procedure in Case i by sending a TAU request message to the MME:
Case i. The UE receives an indication of "RRC Connection failure" from a lower layer and there is no pending signaling or user UL data (i.e., when the lower layer requests NAS signaling connection recovery).

The proposal of the present invention may be reflected in subsection 5.5.3.2.2 of the standard document 3GPP TS 24.301.

### * Performing NAS recovery procedure

### - Example 1-1)

For Case i, if the UE is attached for the CP-CIoT service and a request for "S1 connection release just after uplink data transmission" has been sent to the network at the time of the last UL data transmission, tracking area update for the NAS signaling connection recovery is not initiated.

### - Example 1-2)

For Case i, if the UE is attached for the CP-CIoT service, other uplink data transmission is not expected, and a request for "S1 connection release just after the uplink data transmission" has been sent to the network, the tracking area update for NAS signaling connection recovery is not initiated.

### - Example 2)

For Case i, if the UE is attached for the CP-CIoT service and the following conditions are satisfied, the tracking area update for NAS signaling connection recovery is not initiated:
No downlink data transmission (e.g., acknowledgment or response to uplink data) is expected; and
No other uplink data transmission is expected.

### - Example 3)

For Case i, if the UE is attached for the CP-CIoT service and the next information has been indicated to the network (e.g., MME) at the time of the last uplink data transmission, the tracking area update for NAS signaling connection recovery is not initiated:
Downlink data transmission (e.g., acknowledgment or response to uplink data) subsequent to uplink data transmission is not expected; or
No other uplink data transmission is expected.

### * Performing the NAS recovery procedure

### - Example 1)

For Case i, if the UE is attached for the CP-CIoT service and one of the following conditions is met, the tracking area update procedure for NAS signaling connection recovery is initiated:
Downlink data transmission (e.g., acknowledgment or response to uplink data) is expected;
Other uplink data transmission is expected; or
The UE has not sent a request for "S1 connection release just after uplink data transmission" to the network at the time of the last UL data transmission.

### - Example 2)

For Case i, a UE only using EPS services with CP-CIoT EPS optimization (i.e., a UE using only CP-CIoT EPS optimization) triggers NAS signaling connection recovery only when downlink data transmission is expected.

### - Example 3)

Case i may be applied only when the UE is registered in (or camped on) the NB-IoT RAT (i.e., NB-S1 mode). For example, subsection 5.5.3.2.2 of 3GPP TS 24.301 may have the following description.

For Case i, a UE only using EPS services with CP-CIoT EPS optimization in the NB-S1 mode (i.e., a UE using only CP-CIoT EPS optimization in the NB-S1 mode) triggers NAS signaling connection recovery only when downlink data transmission is expected.

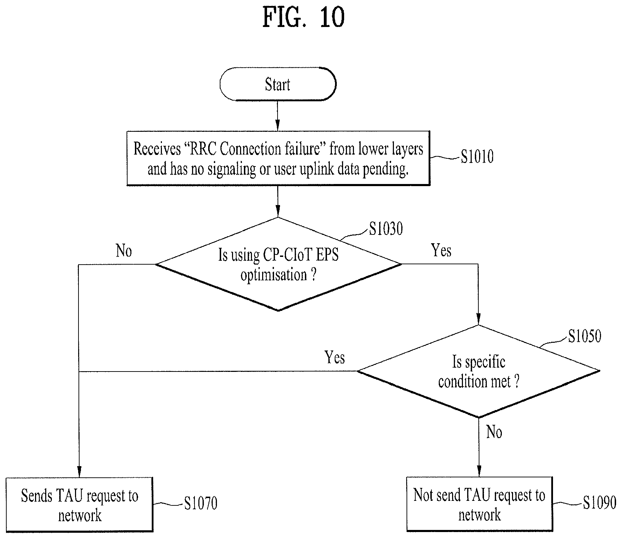

FIG. 10 illustrates a method of initiating a TAU procedure according to the present invention.

Referring to FIG. 10, the UE receives 'RRC connection failure' from a lower layer. If there is no pending signaling or user uplink data (that is, the lower layer requests NAS signaling connection recovery) (S1010), namely if Case 1 takes place, the UE in the EMM-REGISTERED state initiates the TAU procedure for NAS signaling connection recovery (S1070) by sending the state of the UE (S1030, S1050) and a TAU request to the network, or does not send the TAU request to the network such that the TAU procedure is not initiated (S1090).

For example, if Case i takes places for a UE (S1030, No) that is not (only) using CP-CIoT EPS optimization, the UE initiates the TAU procedure by transmitting a TAU request message to the network (S1070). On the other hand, if Case i takes places for a UE (S1030, Yes) that is not (only) using the CP-CIoT EPS optimization, the UE sends a TAU request to the network (S1070) or does not send the same (S1090) according to a specific condition.

For example, the specific condition may include whether downlink data transmission for the UE is expected (for example, whether it has been indicated to the network at the time of uplink data transmission that downlink data transmission subsequent to the uplink data transmission is expected). If the UE is expecting downlink data transmission, for example, if release assistance information indicating that downlink data transmission subsequent to uplink data transmission is expected has been included in a NAS message when the UE performs the uplink data transmission through the NAS message (S1050, Yes), the UE may initiate the TAU procedure by sending a TAU request to the network (S1070). On the other hand, if the UE is not expecting downlink data transmission, for example, if the UE has not informed the network that downlink data transmission subsequent to uplink data transmission is expected when the UE performs the uplink data transmission through the NAS message (S 1050, No), the UE may not send a TAU request to the network (S1090). In other words, Case i may be defined to be applied (only) when the UE is (only) using CP-CIoT EPS optimization and downlink data transmission (subsequent to the uplink data transmission) is expected.

In addition to whether downlink data transmission (subsequent to uplink data transmission) is expected, whether or not the network (MME) has been informed that subsequent UL data is present/expected when a NAS message containing the UL data is transmitted; and/or the network (MME) has been informed that S1 release should be performed just after uplink data transmission when a NAS message containing UL data is transmitted may be used as the specific condition of FIG. 10.

For reference, in conventional cases, if AS security is not activated at the time of detection of radio link failure, the RRC layer transitions to RRC_IDLE and transmits "other" to the NAS layer as a release cause, and therefore neither NAS recovery nor RRC re-establishment is performed. On the other hand, if the UE is an NB-IoT UE, for example, even if AS security is not activated at the time of detection of radio link failure, the RRC layer may transmit 'RRC connection failure' to an upper layer (e.g., the NAS layer) while transitioning from RRC_CONNECTED to RRC_IDLE. In this case, the NAS layer receiving 'RRC connection failure' from the RRC layer is in the situation of Case i described above, and the proposal of the present invention described above may be applied. If the UE is not an NB-IoT UE, the UE may transmit 'other', which is a cause of release, to the NAS layer. In this case, the NAS layer may not initiate the TAU procedure because the operation does not comply with Case i.

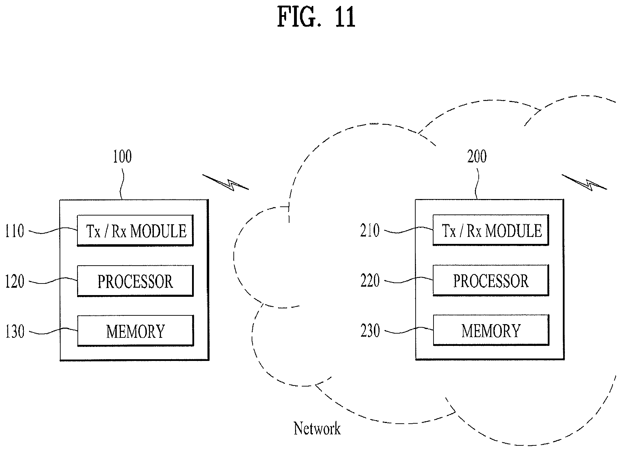

FIG. 11 illustrates configuration of a UE and a network node according to a preferred embodiment of the present invention.

The UE 100 according to the present invention may include a transceiver 110, a processor 120, and a memory 130. The transceiver 110 may be referred to as a radio frequency (RF) unit. The transceiver 110 may be configured to transmit and receive various signals, data and information to and from an external device. The UE 100 may be connected to the storage device by wire and/or wirelessly. The processor 150 may control overall operation of the UE 100, and be configured to calculate and process information for the UE 100 to transmit and receive to and from the external device. In addition, the processor 120 may be configured to perform the proposed operations of the UE. The memory 130 may store the calculated and processed information for a predetermined time, and may be replaced by another constituent such as a buffer (not shown).

Referring to FIG. 11, the network node 200 according to the present invention may include a transceiver 210, a processor 220 and a memory 230. The transceiver 210 may be referred to as an RF unit. The transceiver 210 may be configured to transmit and receive various signals, data and information to and from an external device. The network node 200 may be connected to the storage device by wire and/or wirelessly. The processor 220 may control overall operation of the network node 200, and be configured to calculate and process information for the network node 200 to transmit and receive to and from the external device. In addition, the processor 220 may be configured to perform the proposed operations of the network node. The memory 230 may store the calculated and processed information for a predetermined time, and may be replaced by another constituent such as a buffer (not shown).

For configuration of the UE 100 and the network apparatus, the details described in various embodiments of the present invention may be independently applied or implemented such that two or more embodiments are simultaneously applied. For simplicity, redundant description is omitted.

The embodiments of the present invention may be implemented through various means. For example, the embodiments may be implemented by hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as an apparatus, a procedure, or a function that performs the functions or operations described above. Software code may be stored in a memory unit and executed by a processor. The memory unit is located at the interior or exterior of the processor and may transmit and receive data to and from the processor via various known means.

As described above, the detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the scope of the invention described in the appended claims. Accordingly, the invention should not be limited to the specific embodiments described herein, but should be accorded the broadest scope consistent with the principles and novel features disclosed herein.

### Industrial Applicability

The communication method described above is applicable to various wireless communication systems including IEEE 802.16x and 802.11x systems as well as a 3GPP system. Furthermore, the proposed method is applicable to a millimeter wave (mmWave) communication system using an ultrahigh frequency band.

## Claims

1. A method for initiating a tracking area update, TAU, procedure by a user equipment, UE, (100) in a wireless communication system, the method comprising:
performing transmission of uplink data to a network by using control plane cellular internet of things, CIoT, evolved packet system, EPS, optimization in which the UE and the network can transfer data in non-access stratum, NAS, protocol data units, PDUs; and
transmitting (S1070), to the network, a TAU request based on a detection of a case related to initiating the TAU procedure,
wherein the TAU request based on the detection of the case is transmitted when the UE has indicated to the network that reception of downlink data subsequent to the transmission of the uplink data is expected during the transmission of the uplink data using control plane CIoT EPS optimization (S1030), and
wherein the case is that a NAS layer of the UE receives a radio resource control, RRC, connection failure from a lower layer and has no signaling or uplink user data pending (S1010).

2. The method according to claim 1,
wherein, if the user equipment is using the control plane connection to transport the user data and if the user equipment has not indicated to the network that reception of the downlink data subsequent to the transmission of the uplink data is expected, the TAU request is not transmitted to the network even when the indication of the RRC connection failure is received from the lower layer and there is no pending signaling or uplink user data.

3. The method according to claim 1,
wherein the transmission of the uplink data is performed through a NAS message.

4. The method according to claim 3,
wherein the NAS message comprises a release assistance indication information element,
wherein the release assistance indication information element indicates whether or not reception of downlink data is expected after the transmission of the uplink data.

5. A computer-readable medium (130) comprising code portions which, when executed on a processor (120), configure the processor to perform all steps of a method according to any one of the preceding method claims.

6. A user equipment, UE, (100) for initiating a tracking area update, TAU, procedure in a wireless communication system, the user equipment comprising:
a radio frequency, RF, unit (110); and
a processor (120) configured to control the RF unit,
wherein the processor is configured to:
- control the RF unit to perform transmission of uplink data to a network by using control plane cellular internet of things, CIoT, evolved packet system, EPS, optimization in which the UE and the network can transfer data in non-access stratum, NAS, protocol data units, PDUs; and
- control the RF unit to transmit, to the network, a TAU request based on the detection of a case related to initiating the TAU procedure;
wherein the TAU request based on the detection of the case is transmitted when the UE has indicated to the network that reception of downlink data subsequent to the transmission of the uplink data is expected during the transmission of the uplink data using control plane CIoT EPS optimization, and
wherein the case is that a NAS layer of the UE receives a radio resource control, RRC, connection failure from a lower layer and has no signaling or uplink user data pending.

7. The user equipment according to claim 6, wherein, if the user equipment is using the control plane connection to transport the user data and the user equipment has not indicated to the network that reception of the downlink data subsequent to the transmission of the uplink data is expected, the processor is configured to initiate the TAU procedure even when the indication of the RRC connection failure is received from the lower layer and there is no pending signaling or uplink user data.

8. The user equipment according to claim 6,
wherein the processor is configured to control the RF unit to perform the transmission of the uplink data through a NAS message.

9. The user equipment according to claim 8, wherein the NAS message comprises a release assistance indication information element,
wherein the release assistance indication information element indicates whether or not reception of downlink data is expected after the transmission of the uplink data.

## Patentansprüche

1. Verfahren zum Beginn einer Verfolgungsbereichsaktualisierungs-, TAU, Prozedur durch ein Benutzergerät, UE (100), in einem Drahtloskommunikationssystem, wobei das Verfahren umfasst:
Durchführen einer Übertragung von Uplink-Daten zu einem Netzwerk unter Verwendung von Steuerebenen-zellulares Internet der Dinge-, CIoT, entwickeltes Paketsystem-, EPS, Optimierung, bei der das UE und das Netzwerk Daten in Nichtzugangsschicht-, NAS, Protokolldateneinheiten, PDUs, übertragen können; und
Senden (S1070) einer TAU-Anforderung an das Netzwerk basierend auf einer Erkennung eines Falls in Bezug auf den Beginn der TAU-Prozedur,
wobei die TAU-Anforderung basierend auf der Erkennung des Falls gesendet wird, wenn das UE dem Netzwerk angegeben hat, dass ein Empfang von Downlink-Daten im Anschluss an die Übertragung der Uplink-Daten während der Übertragung der Uplink-Daten unter Verwendung der Steuerebenen-CIoT-EPS-Optimierung (S1030) erwartet wird, und
wobei der Fall ist, dass eine NAS-Schicht des UE einen Funkressourcensteuerungs-, RRC, Verbindungsfehlschlag von einer unteren Schicht empfängt und keine ausstehenden Signalisierungs- oder Uplink-Benutzerdaten hat (S1010).

2. Verfahren nach Anspruch 1, wobei, wenn das Benutzergerät die Steuerebenenverbindung zum Transportieren der Benutzerdaten verwendet und wenn das Benutzergerät dem Netzwerk nicht angegeben hat, dass der Empfang der Downlink-Daten im Anschluss an die Übertragung der Uplink-Daten erwartet wird, die TAU-Anforderung nicht an das Netzwerk gesendet wird, selbst wenn die Angabe des RRC-Verbindungsfehlschlags von der unteren Schicht empfangen wird und keine ausstehenden Signalisierungs- oder Uplink-Benutzerdaten vorliegen.

3. Verfahren nach Anspruch 1, wobei die Übertragung der Uplink-Daten über eine NAS-Nachricht durchgeführt wird.

4. Verfahren nach Anspruch 3, wobei die NAS-Nachricht ein Freigabeassistenzangabe-Informationselement umfasst,
wobei das Freigabeassistenzangabe-Informationselement angibt, ob nach der Übertragung der Uplink-Daten ein Empfang von Downlink-Daten erwartet wird oder nicht.

5. Computerlesbares Medium (130), umfassend Codeabschnitte, die, wenn sie auf einem Prozessor (120) ausgeführt werden, den Prozessor so konfigurieren, dass alle Schritte eines Verfahrens gemäß einem der vorhergehenden Verfahrensansprüche ausgeführt werden.

6. Benutzergerät, UE (100), zum Beginn einer Verfolgungsbereichsaktualisierungs-, TAU, Prozedur in einem Drahtloskommunikationssystem, wobei das Benutzergerät umfasst:
eine Funkfrequenz-, RF-, Einheit (110); und
einen Prozessor (120), der konfiguriert ist, um die RF-Einheit zu steuern,
wobei der Prozessor konfiguriert ist zum:
- Steuern der RF-Einheit zum Durchführen einer Übertragung von Uplink-Daten zu einem Netzwerk unter Verwendung von Steuerebenen-zellulares Internet der Dinge-, CIoT, entwickeltes Paketsystem-, EPS, Optimierung, bei der das UE und das Netzwerk Daten in Nichtzugangsschicht-, NAS, Protokolldateneinheiten, PDUs, übertragen können; und
- Steuern der RF-Einheit zum Senden einer TAU-Anforderung an das Netzwerk basierend auf einer Erkennung eines Falls in Bezug auf den Beginn der TAU-Prozedur,
wobei die TAU-Anforderung basierend auf der Erkennung des Falls gesendet wird, wenn das UE dem Netzwerk angegeben hat, dass ein Empfang von Downlink-Daten im Anschluss an die Übertragung der Uplink-Daten während der Übertragung der Uplink-Daten unter Verwendung der Steuerebenen-CIoT-EPS-Optimierung erwartet wird, und
wobei der Fall ist, dass eine NAS-Schicht des UE einen Funkressourcensteuerungs-, RRC, Verbindungsfehlschlag von einer unteren Schicht empfängt und keine ausstehenden Signalisierungs- oder Uplink-Benutzerdaten hat.

7. Benutzergerät nach Anspruch 6, wobei, wenn das Benutzergerät die Steuerebenenverbindung zum Transportieren der Benutzerdaten verwendet und das Benutzergerät dem Netzwerk nicht angegeben hat, dass der Empfang der Downlink-Daten im Anschluss an die Übertragung der Uplink-Daten erwartet wird, der Prozessor konfiguriert ist zum Beginn der TAU-Prozedur, selbst wenn die Angabe des RRC-Verbindungsfehlschlags von der unteren Schicht empfangen wird und keine ausstehenden Signalisierungs- oder Uplink-Benutzerdaten vorliegen.

8. Benutzergerät nach Anspruch 6, wobei der Prozessor zum Steuern der RF-Einheit konfiguriert ist, um die Übertragung der Uplink-Daten über eine NAS-Nachricht durchzuführen.

9. Benutzergerät nach Anspruch 8, wobei die NAS-Nachricht ein Freigabeassistenzangabe-Informationselement umfasst,
wobei das Freigabeassistenzangabe-Informationselement angibt, ob nach der Übertragung der Uplink-Daten ein Empfang von Downlink-Daten erwartet wird oder nicht.

## Revendications

1. Procédé d'initiation d'une procédure de mise à jour de zone de suivi, TAU, par un équipement utilisateur, UE, (100) dans un système de communication sans fil, le procédé comprenant :
l'exécution d'une transmission de données en liaison montante jusqu'à un réseau en utilisant une optimisation de système par paquets évolué, EPS, d'internet cellulaire des objets, CIoT, dans le plan de commande dans lequel l'UE et le réseau peuvent transférer des données dans des unités de données de protocole, PDU, de strate de non accès, NAS ; et
la transmission (S1070), au réseau, d'une demande de TAU sur la base d'une détection d'un cas se rapportant à l'initiation de la procédure de TAU,
dans lequel la demande de TAU sur la base de la détection du cas est transmise lorsque l'UE a indiqué au réseau qu'une réception de données en liaison descendante faisant suite à la transmission des données en liaison montante est attendue lors de la transmission des données en liaison montante en utilisant l'optimisation EPS CIoT dans le plan de commande (S1030), et
dans lequel le cas est qu'une couche NAS de l'UE reçoit un échec de connexion de commande de ressources radio, RRC, d'une couche inférieure et n'a ni signalisation, ni données d'utilisateur en liaison montante en attente (S1010).

2. Procédé selon la revendication 1,
dans lequel, si l'équipement utilisateur utilise la connexion au plan de commande pour transporter les données d'utilisateur et si l'équipement utilisateur n'a pas indiqué au réseau qu'une réception de données en liaison descendante faisant suite à la transmission des données en liaison montante est attendue, la demande de TAU n'est pas transmise au réseau même lorsque l'indication de l'échec de connexion RRC est reçue de la couche inférieure et qu'il n'y a ni signalisation, ni données d'utilisateur en liaison montante en attente.

3. Procédé selon la revendication 1,
dans lequel la transmission des données en liaison montante est effectuée par l'intermédiaire d'un message NAS.

4. Procédé selon la revendication 3,
dans lequel le message NAS comprend un élément d'information d'indication d'aide à la libération,
dans lequel l'élément d'information d'indication d'aide à la libération indique si une réception de données en liaison descendante est ou non attendue après la transmission des données en liaison montante.

5. Support lisible par ordinateur (130) comprenant des parties de code qui, lorsqu'elles sont exécutées sur un processeur (120), configurent le processeur pour mettre en œuvre toutes les étapes d'un procédé selon l'une quelconque des revendications de procédé précédentes.

6. Équipement utilisateur, UE, (100) pour initier une procédure de mise à jour de zone de suivi, TAU, dans un système de communication sans fil, l'équipement utilisateur comprenant :
une unité en radiofréquence, RF, (110) ; et
un processeur (120) configuré pour commander l'unité RF,
dans lequel le processeur est configuré pour :
- commander l'unité RF pour mettre en œuvre une transmission de données en liaison montante jusqu'à un réseau en utilisant une optimisation de système par paquets évolué, EPS, d'internet cellulaire des objets, CIoT, dans le plan de commande dans lequel l'UE et le réseau peuvent transférer des données dans des unités de données de protocole, PDU, de strate de non accès, NAS ; et
- commander l'unité RF pour transmettre, au réseau, une demande de TAU sur la base d'une détection d'un cas se rapportant à l'initiation de la procédure de TAU ;
dans lequel la demande de TAU sur la base de la détection du cas est transmise lorsque l'UE a indiqué au réseau qu'une réception de données en liaison descendante faisant suite à la transmission des données en liaison montante est attendue lors de la transmission des données en liaison montante en utilisant l'optimisation EPS CIoT dans le plan de commande, et
dans lequel le cas est qu'une couche NAS de l'UE reçoit un échec de connexion de commande de ressources radio, RRC, d'une couche inférieure et n'a ni signalisation, ni données d'utilisateur en liaison montante en attente.

7. Équipement utilisateur selon la revendication 6, dans lequel, si l'équipement utilisateur utilise la connexion au plan de commande pour transporter les données d'utilisateur et si l'équipement utilisateur n'a pas indiqué au réseau qu'une réception de données en liaison descendante faisant suite à la transmission des données en liaison montante est attendue, le processeur est configuré pour initier la procédure de TAU même lorsque l'indication de l'échec de connexion RRC est reçue de la couche inférieure et qu'il n'y a ni signalisation, ni données d'utilisateur en liaison montante en attente.

8. Équipement utilisateur selon la revendication 6,
dans lequel le processeur est configuré pour commander l'unité RF pour mettre en œuvre la transmission des données en liaison montante par l'intermédiaire d'un message NAS.

9. Équipement utilisateur selon la revendication 8, dans lequel le message NAS comprend un élément d'information d'indication d'aide à la libération,
dans lequel l'élément d'information d'indication d'aide à la libération indique si une réception de données en liaison descendante est ou non attendue après la transmission des données en liaison montante.
